# EUROPEAN PATENT APPLICATION

(11) **EP 4 852 370 A1**
(43) Date of publication of application: **09.12.2026**
(21) Application number: 25181472.9
(22) Date of filing: 06.06.2025
(51) Int. Cl.: H04L 9/08

(54) **ENCRYPTION MECHANISM**

(71) Applicant: Teranode Licensing AG, Vaduz, Zweigniederlassung Zug, 6300 Zug (CH)
(72) Inventor: ZHANG, Wei, London, W1W 8AP (GB); PAN, Liuxuan, London, W1W 8AP (GB)
(74) Representative: Page White Farrer

(57) **Abstract**

There is provided a method of generating a decryption key. A key generation function is provided to a secure key generation module. The secure key generation module obtains, internally, a key generation function input, and generates the decryption key based on the key generation function, the key generation function input, and a master private key stored at the secure key generation module, the master private key being of a master private key-public key pair. The secure key generation module outputs the decryption key.

## Description

### TECHNICAL FIELD

The present disclosure relates to a method for generating a decryption key, and related methods of encrypting a message for decryption using the decryption key and decryption using the decryption key.

### BACKGROUND

Digital asset management platforms allow users to store digital assets in a secure manner. Digital assets may include finances, investments, and important documents, for example. A user may have their own account, which acts as a secure vault, in which these assets are stored.

Digital assets may be stored in encrypted from to ensure secure storage of the digital assets. To allow another user to access an encrypted document, it may be encrypted with a public key associated with said recipient user, or another key to which the recipient has or gains access.

In some instances, it may be advantageous to only allow the recipient user to be able to decrypt assets if certain criteria are met. There are a number of encryption schemes which allow conditions to be integrated therein. Some such examples are Identity-Based encryption (IBE) and Time-Specific Encryption (TSE), both of which are asymmetric encryption schemes.

Identity-Based encryption (IBE) is an asymmetric encryption scheme, where the encryption key (public key) is an arbitrary string such as an email, or a mobile phone number. In such a system, it is enough to know the string to encrypt a message. A typical IBE system requires a trusted third party called Private Key Generator (PKG).

Time-Specific Encryption (TSE) is another example of an asymmetric encryption scheme, which allows messages to be decrypted only within a specific time interval, enforced by Time Instant Keys (TIKs) broadcast from a centralized Time Server (TS). This ensures temporal access control without revealing the data beforehand.

In Plain TSE, the Time Server broadcasts a Time Instant Key at each unit. When encrypting a message, the sender specifies a time interval [*t*₀*, t*₁]. The ciphertext can only be decrypted by a receiver who possesses a TIK for some time *t* within that interval. The TS generates and distributes TIKs, and anyone with the appropriate TIK can decrypt the ciphertext for the specified interval. Plain TSE does not use recipient-specific keys; it relies solely on the time-based keys from the TS.

PK TSE extends Plain TSE by adding another layer of public-key encryption. Receivers have their own private keys and public keys. Decryption now requires both the recipient's private key and the correct TIK for the time interval. This ensures that only the intended recipient (with the right private key) and at the right time (with the right TIK) can decrypt the message, providing protection even against a curious Time Server. PKTSE combines the time-based access control of Plain TSE with recipient-specific security of public-key encryption.

### SUMMARY

One problem of using the flexible encryption schemes set out above is that of ensuring only the intended recipient can decrypt the encrypted asset.

In a naive solution, a recipient may be responsible for deriving the decryption key themselves on their own secure deice, thus ensuring that only the recipient has access to the decryption key. However, this solution places a large burden on the computational requirements of the recipient's device, limiting the scalability of the solution. It also requires the recipient's device to be involved in generating the encryption key, and thus reduces the flexibility in the encryption mechanism.

According to a first aspect, there is provided a method of generating a decryption key, the method comprising: providing a key generation function to a secure key generation module; obtaining, internally by the secure key generation module, a key generation function input; generating, by the secure key generation module, the decryption key based on the key generation function, the key generation function input, and a master private key stored at the secure key generation module, the master private key being of a master private key-public key pair; and outputting, by the secure key generation module, the decryption key.

By only storing the master private key in the HSM, no entity outside of the HSM can generate the decryption key. Further, by requiring the HSM to obtain internally the key generation function input, the HSM ensures that the criterion is met thus preventing the fraudulent generations of the decryption key cannot be generated without the criterion having been met.

The key generation function input may be, but is not limited to, one or more system attributes, a system time, or data stored in the secure key generation module, including users stored data.

According to a second aspect, there is provided a method of decrypting an encrypted message, the encrypted message having been encrypted based on a key generation function input and a master public key of a master private key-public key pair, the method comprising, by a receiving device of a receiving user: obtaining the decryption key derived according to the methods provided herein, and decrypting the encrypted message, using the decryption key, to obtain a message.

According to a third aspect, there is provided a method of encrypting data, the method comprising: obtaining a message; obtaining a master public key of a master private key-public key pair, wherein the master private key-public key pair is generated by a secure key generation module; obtaining an instance of a key generation functions input, wherein the key generation function input, when used by the secure key generation module with a key generation function and a master private key of the master private key-public key pair, is used to generate a decryption key for decrypting an encrypted message; and encrypting the message based on the key generation functions input and the master public key to generate the encrypted message.

According to a fourth aspect, there is provided computer equipment comprising: memory comprising one or more memory units; and processing apparatus comprising one or more processing units, wherein the memory stores code arranged to run on the processing apparatus, the code being configured so as when on the processing apparatus to perform any of the method provided herein.

According to a fifth aspect, there is provided a computer program embodied on computer-readable storage and configured so as, when run on one or more processors, to perform the method of any of statements 1 to 31.

### BRIEF DESCRIPTION OF THE DRAWINGS

To assist understanding of embodiments of the present disclosure and to show how such embodiments may be put into effect, reference is made, by way of example only, to the accompanying drawings in which:
Figure 1 is a schematic block diagram of a system for implementing a blockchain;
Figure 2 schematically illustrates some examples of transactions which may be recorded in a blockchain;
Figure 3 provides an example method for generating a master public key-private key pair;
Figure 4 provides an example method for generating a time-instant private key;
Figure 5 provides an example method for generating an event-instant private key;
Figure 6 provides an example method of implementing time-locked encryption;
Figure 7 provides an example method of implementing event-locked encryption; and
Figure 8 provides a further example method of implementing event-locked encryption.

### DETAILED DESCRIPTION OF EMBODIMENTS

An asset management system user, Alice 103a, uses an asset management system to store digital assets. Alice 103a want to encrypt some sensitive information, for example a message to a beneficiary, account credentials, etc., in a way that only the beneficiary, Bob 103b, can decrypt. Alice 103a does not want the asset management system to have no access to such information, such that the asset management system only acts as a storage system and messenger.

To ensure the asset management system cannot decrypt the stored assets, a secure key generation module is used to generate the decryption key, where the secure key generation module keeps secret a master private key for generating the decryption key and determines itself a key generation function input from which the decryption key is derived. Given that no external entity has access to the master private key, no external entity can generate the decryption key for malicious use.

The secure key generation module is provided by an oracle. Herein, the oracle is a component of the asset management system, although it will be appreciated that an external oracle may be used. Moreover, while the present disclosure is provided within the context of a digital asset management system, it will be appreciated that the methods provided herein are not limited to such an implementation, and may be used in any scenario in which a first user wishes to encrypt information which can only be decrypted by a defined second user.

The encryption mechanism provided herein allows Alice 103a to set conditions on the decryption of the digital asset by Bob 103b. Alice 103a can define a time at which the digital asset can be decrypted, or an event which must have passed before the digital asset can be decrypted. The key generation function input is derived internally by the secure key generation module. This ensures that the secure key generation module cannot be used to generate a decryption key for which the conditions have not been met.

A set of modern cryptographic techniques are leveraged to ensure secure and conditional access to sensitive information.

### Identity-Based Encryption

Identity-Based encryption (IBE) is a public-key encryption scheme, where the encryption key (public key) is an arbitrary string such as an email, or a mobile phone number. Herein, the flexibility of this encryption scheme is leveraged to define the string to be a time stamp, a date, or a statement that an event has occurred. In such a system, it is enough to know the string to encrypt a message. A typical IBE system requires a trusted third party called Private Key Generator (PKG). It consists of the following algorithms:
- Master Key Generation
   o PKG generates a master private key *skₘₐₛₜₑᵣ*,
   o PKG derives the master public key *PKₘₐₛₜₑᵣ* from the master private key and publishes *PKₘₐₛₜₑᵣ.*
- Private Key Generation
   o Given a string *ID_{Alice}*, PKG generates Alice's decryption key *sk_{Alice}* from the master private key *skₘₐₛₜₑᵣ* and *ID_{Alice},* and sends *Sk_{Alice}* to Alice through some secure channel.
- Encryption
   o Any party can encrypt a message m using *ID_{Alice}*, *c* = *Enc*(*m, ID_{Alice}*)
- Decryption
   o Alice uses her private key *sk_{Alice}* to decrypt messages $m = Dec \left(c, {sk}_{Alice}\right)$

There are many instantiations of an IBE scheme, most of which are bilinear pairing based.

### Time-Specific Encryption

Time-Specific Encryption (TSE) allows messages to be decrypted only within a specific time interval, enforced by Time Instant Keys (TIKs) broadcast from a centralized Time Server (TS). This ensures temporal access control without revealing the data beforehand. Two variations of TSE - plain TSE and Public Key TSE (PK-TSE) - hare described below, including their algorithms and parameters.

In Plain TSE, the Time Server broadcasts a Time Instant Key at each unit. When encrypting a message, the sender specifies a time interval [*t*₀*, t*₁]. The ciphertext can only be decrypted by a receiver who possesses a TIK for some time *t* within that interval. The TS generates and distributes TIKs, and anyone with the appropriate TIK can decrypt the ciphertext for the specified interval. Plain TSE does not use recipient-specific keys; it relies solely on the time-based keys from the TS. Plain TSE consists of four algorithms:
- Plain Setup (run by TS):
   o Input -> security parameter *κ* and T
   o Output -> TS's Master public keyTS-MPK and master secret keyTS-MSK
- Plain TIK Extraction (run by TS):
   o Input -> TS-MPK, TS-MSK, *t* ∈ time space *τ* = [0, *T* - 1]
   o Output -> TIK *kₜ* (broadcast by TS at time *t* )
- Plain Encryption (run by Sender):
   o Input -> TS-MPK, message *m*, [*t*₀*, t₁*] ⊆ *τ*
   o Output -> ciphertext c (broadcast by Sender to all receivers)
- Plain Decryption (run by Receiver):
   o Input -> TS-MPK, *c* , *kₜ*
   o Output -> m or failure

PK TSE extends Plain TSE by adding another layer of public-key encryption. Receivers have their own private keys and public keys. Decryption now requires both the recipient's private key and the correct TIK for the time interval. This ensures that only the intended recipient (with the right private key) and at the right time (with the right TIK) can decrypt the message, providing protection even against a curious Time Server. PK TSE combines the time-based access control of Plain TSE with recipient-specific security of public-key encryption. The PK TSE consists of five algorithms:
- PK Setup (run by TS):
   o input -> security parameter κ and T
   o Output -> TS's Master public key TS-MPK and master secret key TS-MSK
- PK TIK Extraction (run by TS):
   o Input -> TS-MPK, TS-MSK, *t* ∈ time space *τ* = [0, *T* - **1]**
   o Output -> TIK *kₜ* (broadcast by TS at time *t*)
- PK Key Generation (run by Receiver):
   o Input -> security parameter κ
   o Output -> (*pk, sk*)
- PK Encryption (run by Sender):
   o Input -> TS-MPK, *m*, [*t*₀, *t₁*], *pk*
   o Output -> ciphertext *c*
- PK Decryption (run by Receiver):
   o Input -> TS-MPK, *c*, *kₜ, sk*
   o Output -> *m* or failure

### Example Embodiments

In the examples provided below, the secure key generation module is a hardware security module (HSM). However, the secure key generation module may be any of:
a. a secure enclave on his mobile phone, or
b. a trusted security module on his laptop, or
c. a remote hardware security module from cloud service providers such as KMS from AWS, or
d. a hardware wallet.

Bob 103b has a public/private key pair, known to Alice 103a. For example, as a digital asset system user, Alice 103a will give Bob's email address to the system. The system then sends an email to Bob 103b for him to be registered as a beneficiary. In which process, Bob is expected to use an HSM to generate a private key *sk_{Bob}* securely, and a public key *PK_{Bob}* to be shared with Alice.

It is assumed that the digital asset management system is a trusted entity, such that the digital asset management system will not collude with any Beneficiary to bypass conditions that are set by their users.

Alice 103a encrypts message m twice. One encryption uses Bob's public key, and the other encryption uses an oracle's public key. In some embodiments, Bob's public key is associated with a standard public key encryption scheme such as RSA, and the oracle's public key is associated with an IBE scheme. The oracle's public keys are known before the corresponding private keys are generated by the oracle.

The ordering of the encryption schemes can be used to provide flexibility in different decryption criteria. By encryption the message first with the standard public key encryption scheme using the public key associated with Bob 103b, followed by the IBE scheme using the oracle's public key, there is flexibility in modifying the conditions. In the reverse order, that is applying the IBE scheme to the message, flowed by the standard public key encryption scheme, there is flexibility in changing the recipient.

In the embodiments provided herein, the IBE scheme is applied first to the message, followed by the standard public key encryption scheme, to generate the cyphertext. The methods and system provided herein require only the disclosed IBE scheme to be used, and as such the encryption of the message using the standard public key encryption scheme is not essential.

While an IBE scheme is used herein as the encryption scheme which allows encryption of a message using an alphanumeric string, and the generation of the corresponding decryption key after encryption and based on the alphanumeric string, other encryption schemes may be used. For example, an attribute-based encryption scheme may be used in a similar manner instead of the IBE scheme disclosed herein.

### Oracle Implementation

One important goal of the implementation is to minimize or even remove the trust that is required in the oracle so that any entity can run the oracle as a service for a wide range of use cases. The is achieved by the way in which the secure key generation module generates the decryption keys.

To implement an oracle 302, a secure key generation module 304 is provided that can support key generation algorithms of a chosen identity-based encryption scheme. Example IBE schemes which may be chosen are the Boneh-Franklin IBE scheme or the Sakai-Kasahara key encryption algorithm (SAKKE) scheme.

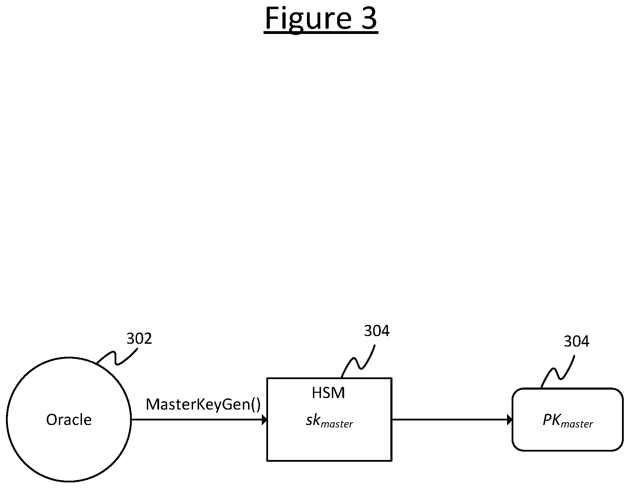

The oracle 302 calls HSM 304 to generate a master private key *sk*ₘₐₛₜₑᵣ, which is kept inside HSM 304 and not exposed to any entity. HSM 304 then computes the corresponding master public key *PKₘₐₛₜₑᵣ* 306 for the oracle 302 to publish as shown in Figure 3.

### Time-Instant Keys

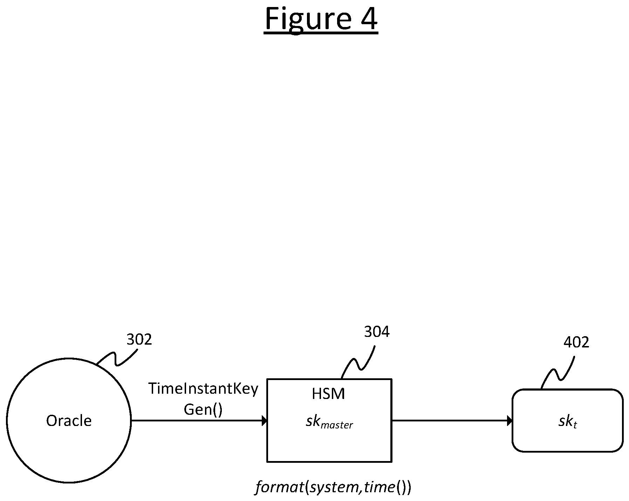

Figure 4 provides an example method for generating a time-instant decryption key.

The oracle 302 calls HSM 304 to generate a time-instant key by providing a key generation function (TimelnstantKeyGen()) to the HSM 304. HSM 304 reads the time internally, converts it to a standard format, using the function *format*(*system,time*())*,* and uses *skₘₐₛₜₑᵣ* to compute a time instant key *skt* for the oracle 302 to publish. The standard format time, also referred to herein as the time code, is the key generation function input to the key generation function.

The time, in its standard format, is also independently used as a public key to encrypt messages by Alice 103a. To be able to decrypt the message successfully, the formatted string that represents the time must be identical in both time instant key generation and encryption. As such, the format of the time may be predefined.

The HSM 304 may be configured to generate the time-instant key at a predefined time, or in response to the receipt of an instruction at that time. Alternatively, the HSM 304 may be configured to generate a time-instant key at a pre-defined frequency for each specific time. This key generation may be limited to a pre-defined time period.

Time represented in larger intervals improves the likelihood that the HSM 304 will correctly generate the time-instant key. Using a date, for example, means that the HSM 304 only needs to obtain the time code on the correct day in order to generate the decryption key. A time code at the granularity of hours or minutes may be used, however it will be appreciated that as the time granularity increases, the response time of the HSM 304 must also increase. That is, if the time is at the granularly of minutes, the HSM 304 must be able to generate the time-instant keys every minute, or respond to an instruction to generate a key within a minute of receiving the instruction.

Where the granularity of the time is too small, the HSM 304 may not obtain the correct time code and therefore not be able to generate the time-instant key. This would ultimately mean that the encrypted message cannot be decrypted.

The time-instant key may then be made available to Bob 103b. The time-instant key may be published on the blockchain or securely communicated with decryption users, e.g. Bob 103b. All intended receivers are able to decrypt their ciphertexts as soon as the time instant keys become available to them, that is once the time used to encrypt the message has passed and the HSM 304 generated the key.

By forcing the input time to be generated inside HSM 304, the trust that would be required on the oracle 302 has been removed. No entity would be able to fool HSM to generate a time instant key that does not correspond to the current time.

Using the time-instant key set out above, Alice 103a may place a condition on the decryption of the message that it can only be decrypted after a predefined time. For example, Alice may define that the message cannot be decrypted on or after Bob's 21^{st} birthday. Alice 103a encrypts the message with a time code representing the date of Bob's 21^{st} birthday. On Bob's 21^{st} birthday, the HSM 304 generates the time-instant decryption key using the date that day, which is then made available to Bob 13b for decrypting the ciphertext.

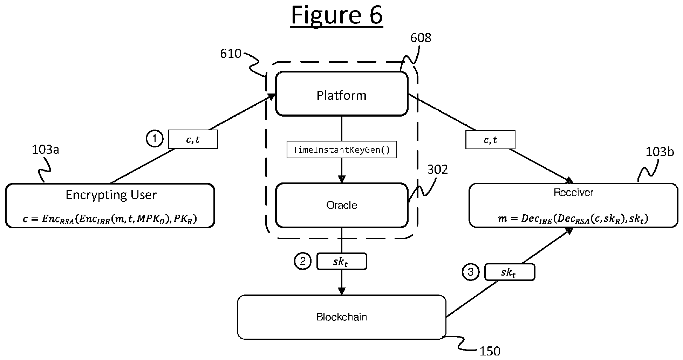

Figure 6 provides an example method for encrypting and decrypting a message based on the time-instant key.

Prior to the method steps of Figure 6, the HSM 304 generates the master private-public key pair, and provides the master private key of the master private-public key pair to Alice 103a.

Alice 103a obtains an instance of the time *t*, and generates the encrypted message *c* at her user device as: $c = {Enc}_{RSA} \left({Enc}_{IBE}\left(m, t, {MPK}_{O}\right),{PK}_{R}\right)$

Where m is the message, or digital asset, to be encrypted, *t* is the time at or after that the encrypted message can be decrypted, *MPK_{O}* is the master public key associated with the HSM 304 of the oracle 302, and *PK_{R}* is the public key of the recipient (Bob 103b).

In the IBE encryption scheme used herein, the combination of time *t* and the master public key *MPK*₀ act as the public key to encrypt the message *m* .

Alice 103a then sends the encrypted message c and time *t* to a digital asset management platform 608 of a digital asset management system 610. The digital asset management platform 608 stores the encrypted message *c* and time *t* .

At time *t* , the digital asset management platform 608 instructs the oracle 302 of the digital asset management system 610 to generate the time-instant key. In the embodiment of Figure 6, the oracle 302 is a component of the digital asset management system 610, however it will be appreciated that the oracle 302 may be independent of the system 610.

The oracle 302 causes the method set out with respect to Figure 4 to be executed, such that the time-instant decryption key *skₜ*402 is generated.

The time-instant decryption key *skt* 402 is then made available to Bob 103b, the receiving entity. In the embodiment of Figure 6, the time-instant key *skt* 402 is provided in a decryption key blockchain transaction. The decryption key blockchain transaction may be generated by the oracle 302 or the digital asset management platform 608. The time instant decryption key *skₜ* 402 may be included in an OP_RETURN of the decryption key blockchain transaction, for example. The decryption key blockchain transaction is then provided to one or more nodes of a blockchain network for storing on the blockchain 150.

In other embodiments, the time instant key 402 may be provided to Bob 103b in a message from the oracle 302 or digital asset management system 610.

At time *t* , the digital asset management platform 608 sends the encrypted message *c* to Bob 103b. Bob 103b also obtains the time-instant key *skt* 402 from the decryption key blockchain transaction stored on the blockchain 150.

Bob 103b then decrypts the encrypted message m using the obtained time-instant key *skₜ*: $m = {Dec}_{IBE} \left({Dec}_{RSA}\left(c, {sk}_{R}\right),{sk}_{t}\right)$

In some embodiments, the digital asset management platform 608 also sends the time *t* to Bob 103b. As discussed above, the time *t* acts as a component of the public key of the IBE encryption scheme. In some embodiments, the time *t* may be required for decryption, as well as *skt,* and in such embodiments, the time *t* is provided to Bob 103b for use in decrypting the encrypted message *c*.

In some embodiments, the time code used in the method set out above may be replaced by another internal system attribute, resulting in an attribute-instant key. In a similar manner to the method set out above, Alice 103a encrypts the message *m* using an instance of the system attribute. To generate the decryption key, the HSM 304 obtains internally its own instance of the system attribute, and uses this as the key generation function input to generate the decryption key.

### Event Instant Keys

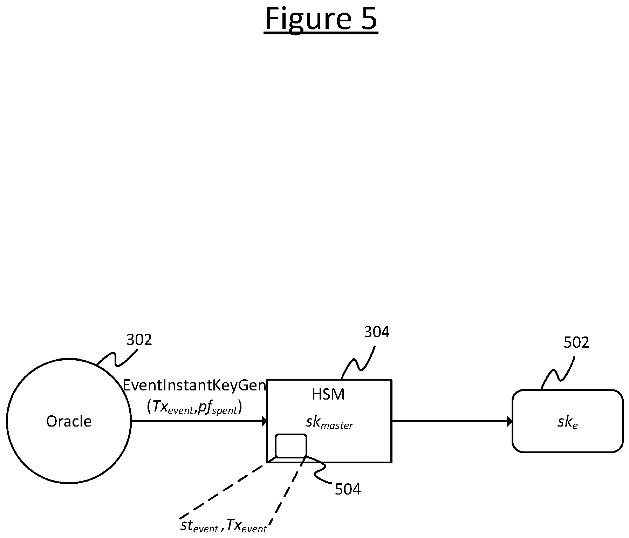

Figure 5 provide an example method for generating an event-instant key, where the event must have occurred from the event-instant key to be generated.

The event is represented by an event statement *stₑᵥₑₙₜ. stₑᵥₑₙₜ* can be any alphanumeric string. For example, the event string may be defined as "Alice passed away" to represent Alice's death.

The event statement is predefined, that is it is defined before the event occurs, and is associated with an event identifier. In the examples provided below, the event identifier is an event blockchain transaction *Txₑᵥₙₜ.* However, it will be appreciated that the event identifier may be any unique identifier which can be stored with the event statement and used to retrieve the event statement, as discussed below. For example, the event identifier may be the transaction identifier *TxIDₑᵥₑₙₜ* of the event blockchain transaction. In another example, the event identifier may be a unique alphanumeric code which is not associated with e blockchain transaction.

Prior to the event, the oracle 302 provides the event statement *stₑᵥₑₙₜ* and the event identifier, here the event transaction *Txₑᵥₑₙₜ,* to the HSM 304. The HSM 304 stores the event statement *stₑᵥₑₙₜ* in association with the event transaction *Txₑᵥₑₙₜ* in an event statement database 504 of the HSM 304.

Once the event has occurred, the oracle 302 provides a key generation function (EventInstantKeyGen()) to the HSM 304 together with the event identifier. The HSM 304 uses the event identifier to obtain the event statement *stₑᵥₑₙₜ* from the event statement database 504. The obtained event statement *stₑᵥₑₙₜ* is used as the key generation function input, such that the HSM 304 generates an event instant key *skₑ* 502 using the event statement *stₑᵥₑₙₜ* and the master private key *skₘₐₛₜₑᵣ.*

The HSM 304 outputs the event instant key *skₑ* 502 for use by a decrypting entity.

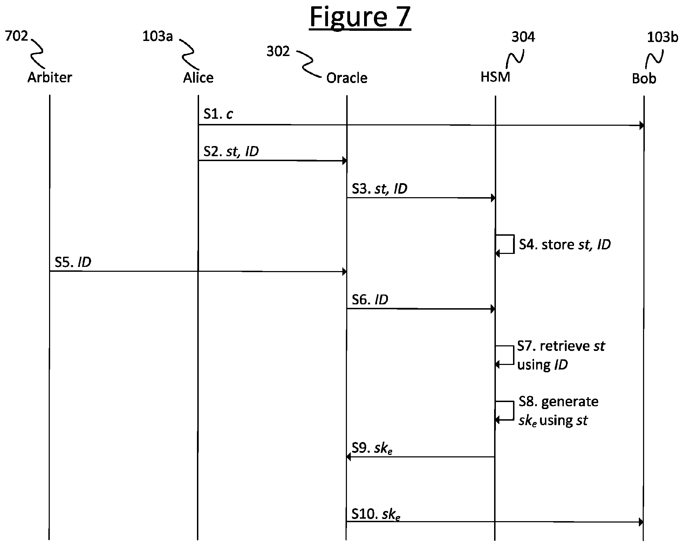

Figure 7 provides an example method for using the event instant key *skₑ* 502 for decryption. In this example, there is no digital asset management platform 608, and instead Alice 103a and Bob 103b communicate with each other. However, it will be appreciated that Alice 103a and Bob 103b may communicate via a digital asset management platform 608.

Prior to the method steps of Figure 7, the HSM 304 generates the master private-public key pair, and provides the master private key of the master private-public key pair to Alice 103a.

Alice 103a obtains and instance of the event statement *stₑᵥₑₙₜ,* and encrypts message m as: $c = {Enc}_{RSA} \left({Enc}_{IBE}\left(m, {st}_{event}, {MPK}_{O}\right), {PK}_{R}\right)$

It can be seen that Alice 103a first applies the IBE scheme, followed by the standard public key encryption scheme, however the encryption schemes may be applied in the reverse order or only the IBE scheme may be applied. In a similar manner to the time-instant encryption, the event statement and the master public key act as a public key for the IBE encryption scheme.

At step S1, Alice sends the encrypted message c to Bob 103b.

At step S2, Alice 103a sends the event statement *stₑᵥₑₙₜ* and event identifier *IDₑᵥₑₙₜ* to the oracle 302, which provides these to the HSM at step S3. The HSM 304 stores the event statement *stₑᵥₑₙₜ* in association with the event identifier *IDₑᵥₑₙₜ* at the event statement database 504, step S4.

In the example of Figure 7, the event identifier *IDₑᵥₑₙₜ* may not be associated with an event blockchain transaction. The event identifier may be any alphanumeric string which can be stored with the event statement *stₑᵥₑₙₜ* for use in later retrieving the event statement *stₑᵥₑₙₜ.*

Once the event has passed, an arbiter 702 provides the event identifier *IDₑᵥₑₙₜ* to the oracle 302. The arbiter 702 may be a trusted third party such as a lawyer or doctor for example. By sending the event identifier *ID*ₑᵥₑₙₜ to the oracle 302, the arbiter 302 attests to the event having occurred.

The oracle 302 provides the event identifier *IDₑᵥₑₙₜ* to the HSM at step S6, where it is used to retrieve the event statement *IDₑᵥₑₙₜ* at step S7. The oracle 302 also provides the key generation function to the HSM 304. The HSM 304 generates the event-instant key 502 as set out above with reference to Figure 5 at step S8.

The HSM 304 outputs the event-instant key 502 to the oracle 302 at step S9, which provides the event-instant key 502 to Bob 103b at step S10.

Bob 103b decrypts the encrypted message c using the event-instant key 502 (decryption key) to obtain the message m as follows: $m = {Dec}_{RSA} \left({Dec}_{RSA}\left(c, {sk}_{receiver}\right),{sk}_{e}\right)$

It can be seen that Bob 103b decrypts the cyphertext in the reverse order to the order in which Alice 103a applies encryption schemes.

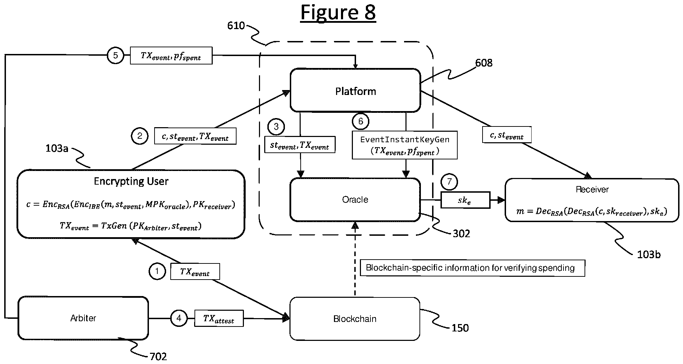

Figure 8 provides a further example method for using the event instant key *skₑ* 502 for decryption. Alice 103a encrypts the message *m* as set out with respect to Figure 7. Alice 103a also generates an event blockchain transaction *Txₑᵥₑₙₜ.* The event blockchain transaction *Txₑᵥₑₙₜ* may comprise the event statement *stₑᵥₑₙₜ* and an output, or UTXO, locked to a public key of the arbiter 702. This output can therefore only be spent by the arbiter 702. The event statement *stₑᵥₑₙₜ* may be provided in an OP_RETURN of the same output, for example. Alternately, a hash of the event statement *stₑᵥₑₙₜ* may be included in the event blockchain transaction *Txₑᵥₑₙₜ*, or the event statement *stₑᵥₑₙₜ* may be embedded in the arbiter's public key *PK_{arbiter}.* In some embodiments, the event statement *stₑᵥₑₙₜ* is not included in the event blockchain transaction *Txₑᵥₑₙₜ.*

Once generated, the event blockchain transaction *Txₑᵥₑₙₜ* is provided to one or more nodes of the blockchain 150 for storing on-chain.

Alice 103a sends the encrypted message *c*, the event statement *stₑᵥₑₙₜ,* and the event blockchain transaction *Txₑᵥₑₙₜ* (or transaction identifier *TxIDₑᵥₑₙₜ*) to the digital asset platform 608. As in Figure 6, the digital asset platform 608 is a component of the digital asset system 610, which further comprises the oracle 302. However, the oracle 302 may be independent of the digital asset platform 608.

The digital asset platform 608 stores the encrypted message c and the event statement *stₑᵥₑₙₜ.* The digital asset platform 608 also provides the event statement *stₑᵥₑₙₜ* and the event blockchain transaction *Txₑᵥₑₙₜ* (or transaction identifier *TxIDₑᵥₑₙₜ*) to the oracle 302 for storing at the event statement database 504 of the HSM 304, as described above.

Once the event occurs, the arbiter 702 generates an attesting blockchain transaction *Txₐₜₜₑₛₜ*, which comprises an input spending the output of the event blockchain transaction *Txₑᵥₑₙₜ* associated with the event statement *stₑᵥₑₙₜ* and locked to the public key of the arbiter 702. The arbiter 702 provides the attesting blockchain transaction *Txₐₜₜₑₛₜ* to one or more nodes of the blockchain 150 for storing on-chain.

By spending the output of the event blockchain transaction *Txₑᵥₑₙₜ* associated with the event statement *stₑᵥₑₙₜ,* the arbiter 702 attests to the event having occurred. As above, the arbiter 702 may be a trusted third party such as a lawyer or doctor.

The arbiter 702 generates a transaction inclusion proof *pfₛₚₑₙₜ* which proves that the attesting blockchain transaction *Txₐₜₜₑₛₜ* has been stored on chain and validly spends the output of the event blockchain transaction *Txₑᵥₑₙₜ.* The transaction inclusion proof *pfₛₚₑₙₜ* may comprise a Merkle proof, a zero knowledge proof, or a valid digital signature for example. Such methods of proving the inclusion of a blockchain transaction are known.

The arbiter 702 then provides the transaction inclusion proof *pfₛₚₑₙₜ* and the event blockchain transaction *Txₑᵥₑₙₜ* (or transaction identifier *TxIDₑᵥₑₙₜ*) to the digital asset platform 608, which passes the transaction inclusion proof *pfₛₚₑₙₜ* and the event blockchain transaction *Txₑᵥₑₙₜ* to the oracle 302.

The digital asset platform 608 also provides the encrypted message c to Bob 103b.

In some embodiments, the digital asset platform 608 also sends the event statement *stₑᵥₑₙₜ* to Bob 103b. As discussed above, the event statement *stₑᵥₑₙₜ* acts as a component of the public key of the IBE encryption scheme. In some embodiments, the event statement *stₑᵥₑₙₜ* may be required for decryption, as well as *skt,* and in such embodiments, the event statement *stₑᵥₑₙₜ* is provided to Bob 103b for use in decrypting the encrypted message *c*.

The oracle 302 obtains information from the blockchain 150. In some embodiments, this information is used by the oracle, together with the transaction inclusion proof *pfₛₚₑₙₜ,* to verify the proof, thus verifying that the output of the event blockchain transaction *Txₑᵥₑₙₜ* associated with the event has been validly spent.

Once the oracle 302 has verified the proof, the oracle 302 provides the event blockchain transaction *Txₑᵥₑₙₜ* and the key generation function to the HSM 304. The HSM 304 uses the event blockchain transaction *Txₑᵥₑₙₜ* to obtain the associated event statement *stₑᵥₑₙₜ* from the event statement database 504, which is uses as the key generation function input as set out above to generate the event-instant private key *skₑ.*

In other embodiments, the oracle 302 passes the information obtained from the blockchain 150, the transaction inclusion proof *pfₛₚₑₙₜ,* and the event blockchain transaction *Txₑᵥₑₙₜ* to the HSM 304. The HSM 304 verifies the poof to verify that the output of the event blockchain transaction *Txₑᵥₑₙₜ* associated with the event has been validly spent.

In this embodiment, the HSM 304 uses the event blockchain transaction *Txₑᵥₑₙₜ* to obtain the associated event statement *stₑᵥₑₙₜ* from the event statement database 504 once it has verified the transaction inclusion proof*pfₛₚₑₙₜ*.

The oracle 302 makes the event-instant private key available to Bob 103b. In the example of Figure 8, the oracle 302 generates a message comprising the event-instant private key which it sends to Bob 103b. In another embodiment, the oracle 302 may generate a decryption key blockchain transaction, as in Figure 6, for providing the event-instant private key to Bob 103b. Other methods of making the decryption key available to Bob 103b will be apparent.

Bob 103b uses the event-instant key to decrypt the encrypted message c as set out above.

In some embodiments, the arbiter 702 sends the attesting blockchain transaction *Txₐₜₜₑₛₜ,* or the attesting blockchain transaction identifier *TxIDₐₜₜₑₛₜ,* to the digital asset platform 608 with the transaction inclusion proof *pfₛₚₑₙₜ,* rather that the event blockchain transaction *Txₑᵥₑₙₜ* (or transaction identifier *TxIDₑᵥₑₙₜ*). In this embodiment, the digital asset platform 608 or oracle 302 uses the attesting blockchain transaction *Txₐₜₜₑₛₜ* to obtain the event blockchain transaction *Txₑᵥₑₙₜ* (or transaction identifier *TxIDₑᵥₑₙₜ*) by accessing the blockchain 150. The event blockchain transaction *Txₑᵥₑₙₜ* is linked to the attesting blockchain transaction *Txₐₜₜₑₛₜ* on chain as the attesting blockchain transaction *Txₐₜₜₑₛₜ* spends the UTXO of the event blockchain transaction *Txₑᵥₑₙₜ.*

Once the event blockchain transaction *Txₑᵥₑₙₜ*, or its ID, has been obtained, this can be used by the HSM 304 to obtain the associated event statement *stₑᵥₑₙₜ* from the event statement database 504.

The arbiter can theoretically spend the transaction at any time. However, the blockchain is leveraged to ensure that any statement attested by an arbiter can be publicly verifiable without compromising confidentiality and privacy.

While transparency enables objections to false attestations, it requires time and a mechanism for an objection to take place and take effect. In some embodiments, a waiting function is created in HSM 304 after EventInstantKeyGen is called. During the waiting, authorized entities such as the platform users themselves can cancel the call and update the pair of *stₑᵥₑₙₜ* and *TXₑᵥₑₙₜ.*

An alternative mechanism for delaying the generation of the event-instant key may be implemented using a similar feature from blockchain, for example a Hashed TimeLock Contract (HTLC) function. In such an example, a blockchain transaction is expected to be included in a blockchain only after a certain period of time has passed. In this case, the oracle 302 can immediately output an event instant key after a successful verification on the transaction inclusion proof.

### Double Encryption

In the examples above, the message m is encrypted twice, once using the IBE scheme and once with the standard public key encryption scheme.

Using only the IBE scheme, it is important to securely provide the decryption key to the decrypting entity (Bob 103b). This is because anyone with access to the decryption key could decrypt the cyphertext *c*.

However, by also encrypting the message m using the public key of the decrypting entity (Bob 103b), no entity other than Bob 103b can decrypt the cyphertext *c* even with access to the time- or event-instant decryption key. As such, the use of double encryption increases the security of the message transfer.

### Further Comments

In embodiments comprising an arbiter 702 which generates blockchain transactions, it is assumed that the arbiter 702 has a public/private key pair for digital signatures which is compatible with blockchain transactions.

The digital asset platform 608 and/or system 610 may be provide by a remote server or a cloudbased server. Users of the platform may access the platform via a unique user account, which enables users to store data accessible only by them. Users may access the platform via a network such as the Internet. Such platforms are known and will not be described in more detail.

While in the embodiments set out above the oracle 302 communicates with the HSM 304, rather than any other entity, it will be appreciated that other entities may communicate with the HSM 304 instead or as well. For example, taking the method of Figure 7, Alice 103a and the arbiter 702 may communicate directly with the HSM 304 to the event statement and/or event ID. The HSM 304 may then output the event-instant key directly to Bob 103b.

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example, blockchain protocols may allow for storage of additional user data or indexes to data in a transaction.

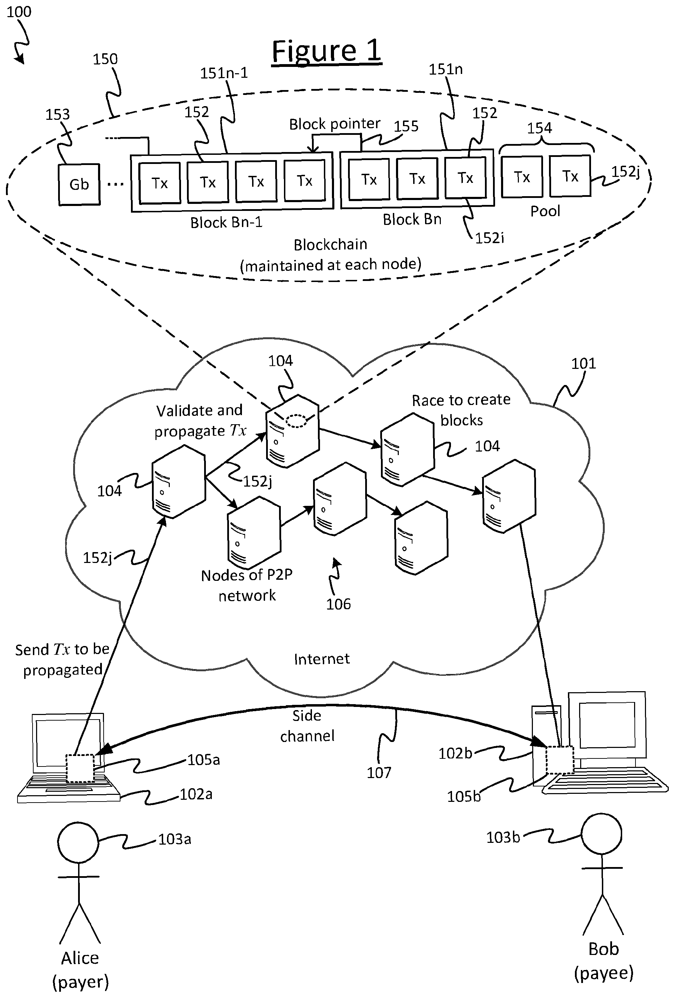

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 (often referred to as "miners") that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout.

A blockchain node 104 may be configured to forward transactions 152 to other blockchain nodes 104, and thereby cause transactions 152 to be propagated throughout the network 106. A blockchain node 104 may be configured to create blocks 151 and to store a respective copy of the same blockchain 150 in their respective memory. A blockchain node 104 may also maintain an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. Spending or redeeming does not necessarily imply transfer of a financial asset, though that is certainly one common application. More generally spending could be described as consuming the output, or assigning it to one or more outputs in another, onward transaction. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Any given blockchain node may be configured to perform one or more of the following operations: validating transactions, storing transactions, propagating transactions to other peers, performing consensus (e.g. proof-of-work) / mining operations. In some examples, each type of operation is performed by a different node 104. That is, nodes may specialise in particular operation. For example, a nodes 104 may focus on transaction validation and propagation, or on block mining. In some examples, a blockchain node 104 may perform more than one of these operations in parallel. Any reference to a blockchain node 104 may refer to an entity that is configured to perform at least one of these operations.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position" or "nonce"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

Some account-based transaction models share several similarities with the output-based transaction model described herein. For example, as mentioned above, the data field of an account-based transaction may point back to a previous transaction, which is equivalent to the input of an output-based transaction which references an outpoint a previous transaction. Thus both models enable linking between transactions. As another example, an account-based transaction contains a "recipient" field (in which a receiving address of an account is specified) and a "value" field (in which an amount of digital asset may be specified). Together the recipient and value fields are equivalent to the output of an output-based transaction which may be used to assign an amount of digital asset to a blockchain address. Similarly, an account-based transaction has a "signature" field which includes a signature for the transaction. The signature is generated using the sender's private key and confirms the sender has authorized this transaction. This is equivalent to an input / unlocking script of an output-based transaction which, typically, includes a signature for the transaction. When both types of transaction are submitted to their respective blockchain networks, the signatures are checked to determine whether the transaction is valid and can be recorded on the blockchain. On an account-based blockchain, a "smart contact" refers to a transaction that contains a script configured to perform one or more actions (e.g. send or "release" a digital asset to a recipient address) in response to one or more inputs (provided by a transaction) meeting one or more conditions defined by the smart contact's script. The smart contract exists as a transaction on the blockchain, and can be called (or triggered) by subsequent transactions. Thus, in some examples, a smart contract may be considered equivalent to a locking script of an output-based transaction, which can be triggered by a subsequent transaction, and checks whether one or more conditions defined by the locking script are met by the input of the subsequent transaction.

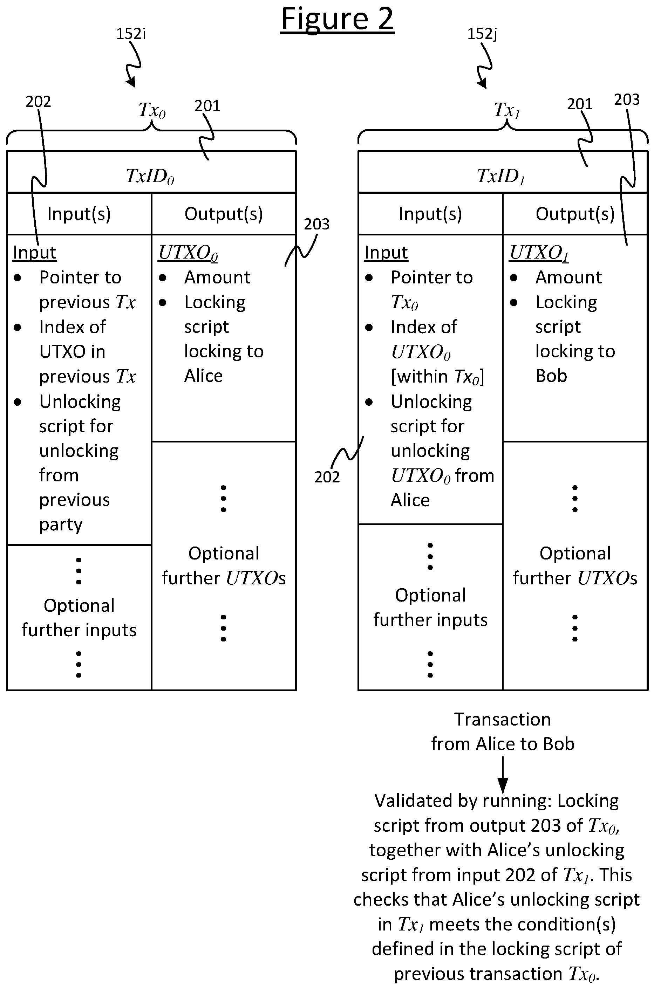

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled *"Tx₁".* It takes an amount of the digital asset that is locked to Alice in the output 203 of a preceding transaction 152i in the sequence, and transfers at least some of this to Bob. The preceding transaction 152i is labelled *"Tx*₀*"* in Figure 2. *Tx₀* and *Tx₁* are just arbitrary labels. They do not necessarily mean that *Tx₀* is the first transaction in the blockchain 151, nor that *Tx*₁ is the immediate next transaction in the pool 154. *Tx₁* could point back to any preceding (i.e. antecedent) transaction that still has an unspent output 203 locked to Alice.

The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* comprises a particular UTXO, labelled here *UTXO₀.* Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Locking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* comprises a locking script [Checksig *P_{A}*] which requires a signature Sig *P_{A}* of Alice in order for *UTXO*₀ to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* comprises a pointer pointing back to *Tx₁* (e.g. by means of its transaction ID, *TxID₀,* which in embodiments is the hash of the whole transaction *Tx₀*). The input 202 of *Tx₁* comprises an index identifying *UTXO*₀ within *Tx₀,* to identify it amongst any other possible outputs of *Tx₀.* The input 202 of *Tx₁* further comprises an unlocking script <Sig *P_{A}*> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This comprises running the locking script and unlocking script together to check whether the unlocking script meets the condition defined in the locking script (where this condition may comprise one or more criteria).

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key *P_{A}.* In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

One or more of the examples described herein may vary within the scope of the attached claims. In general, some examples may be implemented in hardware or special purpose circuits, software, logic or any combination thereof. For example, some parts may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The memory may be of any type suitable to the local technical environment and may be implemented using any suitable data storage technology, such as semiconductor-based memory devices, magnetic memory devices and systems, optical memory devices and systems, fixed memory and removable memory.

Alternatively, or additionally some examples may be implemented using circuitry, or logic circuitry. The circuitry/logic circuitry may be configured to perform one or more of the functions and/or method steps previously described. As a further example, as used in this disclosure, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

It will be appreciated that the above embodiments have been described by way of example only. More generally there may be provided a method, apparatus or program in accordance with any one or more of the following Statements.

Statement 1. A method of generating a decryption key, the method comprising:
providing a key generation function to a secure key generation module;
obtaining, internally by the secure key generation module, a key generation function input;
generating, by the secure key generation module, the decryption key based on the key generation function, the key generation function input, and a master private key stored at the secure key generation module, the master private key being of a master private key-public key pair; and
outputting, by the secure key generation module, the decryption key.

Statement 2. The method of statement 1, wherein the decryption key is a time-instant decryption key, wherein the key generation function input is a time code, wherein obtaining the key generation function input comprises obtaining, by the secure key generation module, the time code corresponding to a current system time.

Statement 3. The method of statement 1, wherein the decryption key is an event-instant decryption key, wherein the key generation function input is an event statement associated with an event, wherein the method further comprises:
receiving, at the secure key generation module, the event statement and an event identifier ; and
storing, at the secure key generation module, the event statement in association with the event identifier.

Statement 4. The method of statement 3, wherein the method further comprises:
receiving an indication that the event has occurred, wherein the key generation function is provided to the secure key generation module in response to the indication that the event has occurred; and
providing the event identifier to the secure generation module in response to the indication that the event has occurred.

Statement 5. The method of statement 4, wherein the event statement is associated with in an event blockchain transaction, wherein the event blockchain transaction is spent by an attesting blockchain transaction, wherein the method further comprises:
verifying that the attesting blockchain transaction is stored on a blockchain;
wherein the key generation function input is obtained by the secure key generation module in response to verifying that the attesting blockchain transaction is stored on the blockchain.

Statement 6. The method of statement 5, wherein the indication that the event has occurred comprises a transaction inclusion proof associated with the attesting blockchain transaction, wherein verifying that the attesting blockchain transaction is stored on the blockchain comprises verifying the transaction inclusion proof.

Statement 7. The method of any of statements 4 to 6, wherein obtaining, internally by the secure key generation module, the key generation function input comprises:
obtaining the event statement stored in association with the event identifier from storage based on the event identifier received in response to the indication that the event has occurred.

Statement 8. The method of any of statement 3 to 7, wherein the event statement is stored in an event blockchain transaction, wherein the event identifier is the event transaction or an event transaction identifier .

Statement 9. The method of statement 5 or any statement dependent thereon, wherein the indication that the event has occurred is received from an arbiter, the arbiter having generated the attesting blockchain transaction.

Statement 10. The method of any preceding statement, wherein the method further comprises:
providing to the secure key generation module a master key generation function;
generating, by the secure key generation module, the master private key-public key pair;
storing, by the secure key generation module at the secure key generation moule, the master private key; and
outputting, by the secure key generation module, the master public key.

Statement 11. The method of statement 10, wherein the master private key is not output by the secure key generation module.

Statement 12. The method of any preceding statement, wherein the method further comprises: making the decryption key available to a receiving user;
wherein the receiving user has access to an encrypted message, wherein the encrypted message comprises a message having been encrypted based on the key generation function input and a master public key of the master private key-public key pair.

Statement 13. The method of statement 12, wherein making the decryption key available to the receiving user comprises:
generating a decryption key blockchain transaction, wherein the decryption key blockchain transaction comprises the time-instant decryption key; and
making the decryption key blockchain transaction available to one or more nodes of a blockchain.

Statement 14. The method of statement 12, wherein making the decryption key available to the receiving user comprises:
generating an electronic message comprising the decryption key; and
sending the electronic message to a receiving user device of the receiving user.

Statement 15. The method of statement 12 or any statement dependent thereon, wherein the secure key generation module is in communication with a digital asset management platform, wherein the method further comprises:
receiving, at the digital asset management platform, the encrypted message from an encrypting user; and
making the message available, by the digital asset management platform, to the receiving user.

Statement 16. The method of any preceding statement, wherein the decryption key is an identity-based decryption key.

Statement 17. The method of any preceding statement, wherein the secure key generation module comprises one of:
a secure enclave on a user device;
a trusted security module on a device;
a remote hardware security module; and
a hardware wallet.

Statement 18. A method of decrypting an encrypted message, the encrypted message having been encrypted based on a key generation function input and a master public key of a master private key-public key pair, the method comprising, by a receiving device of a receiving user:
obtaining the decryption key derived according to statement 1; and
decrypting the encrypted message, using the decryption key, to obtain a message.

Statement 19. The method of statement 18, the encrypted message having been further encrypted using a public key associated with the receiving user, wherein the method further comprises:
decrypting the encrypted message using a private key associated with the receiving user, wherein the public key and the private key are a public-private key pair.

Statement 20. The method of statement 15 and statement 18, wherein the instance of the key generation function input is obtained from the digital asset management platform.

Statement 21. The method of statement 14 and statement 18, where the decryption key is obtained by receiving the electronic message from the digital asset management platform.

Statement 22. The method of statement 13 and statement 18, where the decryption key is obtained by accessing the decryption key blockchain transaction stored on the blockchain.

Statement 23. The method of any of statement 18 to 22, wherein the method further comprises:
obtaining an instance of the key generation function input;
wherein decrypting the encrypted message comprises using the decryption key and the instance of the key generation function input, to obtain the message.

Statement 24. A method of encrypting data, the method comprising:
obtaining a message;
   obtaining a master public key of a master private key-public key pair, wherein the master private key-public key pair is generated by a secure key generation module;
obtaining an instance of a key generation functions input, wherein the key generation function input, when used by the secure key generation module with a key generation function and a master private key of the master private key-public key pair, is used to generate a decryption key for decrypting an encrypted message; and
encrypting the message based on the key generation functions input and the master public key to generate the encrypted message.

Statement 25. The method of statement 24, wherein the method further comprises:
further encrypting the message using a public key associated with a receiving user of the encrypted message.

Statement 26. The method of statement 24 or statement 25, wherein the secure key generation module is associated with a digital asset management platform, wherein the method further comprises providing the encrypted message to the digital asset management platform.

Statement 27. The method of any of statement 24 to 26, wherein the decryption key is a time-instant decryption key, wherein the key generation function input is a time code associated with a decryption time.

Statement 28. The method of any of statement 24 to 26, wherein the decryption key is an event-instant decryption key, wherein the key generation function input is an event statement associated with an event, wherein the method further comprises:
generating an event blockchain transaction comprising the event statement; and
providing the event blockchain transaction to one or more nodes of a blockchain.

Statement 29. The method of statement 28, wherein the method further comprises, when the event has occurred:
generating an attesting blockchain transaction, wherein the attesting blockchain transaction spends an output of the event blockchain transaction; and
providing the event blockchain transaction to one or more nodes of the blockchain.

Statement 30. The method of statement 26 and statement 29, wherein the method further comprises:
generating a transaction inclusion proof associated with the attesting blockchain transaction; and
providing the transaction inclusion proof to the digital asset management platform.

Statement 31. The method of statement 28, wherein the method further comprises:
providing the event statement and the event transaction to the secure key generation module for storing.

Statement 32. Computer equipment comprising:
memory comprising one or more memory units; and
processing apparatus comprising one or more processing units, wherein the memory stores code arranged to run on the processing apparatus, the code being configured so as when on the processing apparatus to perform the method of any of statements 1 to 31.

Statement 33. A computer program embodied on computer-readable storage and configured so as, when run on one or more processors, to perform the method of any of statements 1 to 31.

## Claims

1. A method of generating a decryption key, the method comprising:
providing a key generation function to a secure key generation module;
obtaining, internally by the secure key generation module, a key generation function input;
generating, by the secure key generation module, the decryption key based on the key generation function, the key generation function input, and a master private key stored at the secure key generation module, the master private key being of a master private key-public key pair; and
outputting, by the secure key generation module, the decryption key.

2. The method of claim 1, wherein the decryption key is a time-instant decryption key, wherein the key generation function input is a time code, wherein obtaining the key generation function input comprises obtaining, by the secure key generation module, the time code corresponding to a current system time.

3. The method of claim 1, wherein the decryption key is an event-instant decryption key, wherein the key generation function input is an event statement associated with an event, wherein the method further comprises:
receiving, at the secure key generation module, the event statement and an event identifier; and
storing, at the secure key generation module, the event statement in association with the event identifier.

4. The method of claim 3, wherein the method further comprises:
receiving an indication that the event has occurred, wherein the key generation function is provided to the secure key generation module in response to the indication that the event has occurred; and
providing the event identifier to the secure generation module in response to the indication that the event has occurred.

5. The method of claim 4, wherein the event statement is associated with an event blockchain transaction, wherein the event blockchain transaction is spent by an attesting blockchain transaction, wherein the method further comprises:
verifying that the attesting blockchain transaction is stored on a blockchain;
wherein the key generation function input is obtained by the secure key generation module in response to verifying that the attesting blockchain transaction is stored on the blockchain.

6. The method of claims 4 or 4, wherein obtaining, internally by the secure key generation module, the key generation function input comprises:
obtaining the event statement stored in association with the event identifier from storage based on the event identifier received in response to the indication that the event has occurred.

7. The method of any preceding claim, wherein the method further comprises:
making the decryption key available to a receiving user;
wherein the receiving user has access to an encrypted message, wherein the encrypted message comprises a message having been encrypted based on the key generation function input and a master public key of the master private key-public key pair; wherein making the decryption key available to the receiving user comprises:
generating a decryption key blockchain transaction, wherein the decryption key blockchain transaction comprises the time-instant decryption key; and
making the decryption key blockchain transaction available to one or more nodes of a blockchain.

8. A method of decrypting an encrypted message, the encrypted message having been encrypted based on a key generation function input and a master public key of a master private key-public key pair, the method comprising, by a receiving device of a receiving user:
obtaining the decryption key derived according to claim 1; and
decrypting the encrypted message, using the decryption key, to obtain a message.

9. A method of encrypting data, the method comprising:
obtaining a message;
obtaining a master public key of a master private key-public key pair, wherein the master private key-public key pair is generated by a secure key generation module;
obtaining an instance of a key generation functions input, wherein the key generation function input, when used by the secure key generation module with a key generation function and a master private key of the master private key-public key pair, is used to generate a decryption key for decrypting an encrypted message; and
encrypting the message based on the key generation functions input and the master public key to generate the encrypted message.

10. The method of claim 9, wherein the decryption key is a time-instant decryption key, wherein the key generation function input is a time code associated with a decryption time.

11. The method of claim 9 or claim 10, wherein the decryption key is an event-instant decryption key, wherein the key generation function input is an event statement associated with an event, wherein the method further comprises:
generating an event blockchain transaction associated with the event statement; and
providing the event blockchain transaction to one or more nodes of a blockchain.

12. The method of claim **11,** wherein the method further comprises, when the event has occurred:
generating an attesting blockchain transaction, wherein the attesting blockchain transaction spends an output of the event blockchain transaction; and
providing the event blockchain transaction to one or more nodes of the blockchain.

13. The method of claim 9,
wherein the decryption key is an event-instant decryption key, wherein the key generation function input is an event statement associated with an event, wherein the method further comprises:
providing the event statement and an event statement identifier to the secure key generation module for storing.

14. Computer equipment comprising:
memory comprising one or more memory units; and
processing apparatus comprising one or more processing units, wherein the memory stores code arranged to run on the processing apparatus, the code being configured so as when on the processing apparatus to perform the method of any of claims 1 to 13

15. A computer program embodied on computer-readable storage and configured so as, when run on one or more processors, to perform the method of any of claims 1 to 13.
